# EUROPÄISCHE PATENTSCHRIFT

(11) **EP 2 678 256 B1**
(45) Veröffentlichungstag und Bekanntmachung des Hinweises auf die Patenterteilung: **10.12.2014**
(21) Anmeldenummer: 12704674.6
(22) Anmeldetag: 07.02.2012
(51) Int. Cl.: B65G 49/04

(54) **ANLAGE ZUR TAUCHBEHANDLUNG VON GEGENSTÄNDEN**
SYSTEM FOR DIP COATING ARTICLES
INSTALLATION DE TRAITEMENT PAR IMMERSION D'OBJETS

(30) Priorität: 21.02.2011 DE 102011011901
(43) Veröffentlichungstag der Anmeldung: 01.01.2014
(73) Patentinhaber: Eisenmann AG, 71032 Böblingen (DE)
(72) Erfinder: ROBBIN, Jörg, 72119 Ammerbuch-Pfäffingen (DE)
(74) Vertreter: Ostertag, Ulrich
(86) Internationale Anmeldenummer: PCT/EP2012/000535
(87) Internationale Veröffentlichungsnummer: WO 2012/113506

(56) Entgegenhaltungen:
- WO-A1-2010/121688
- DE-A1- 10 333 148
- DE-C1- 4 304 145

## Beschreibung

Die Erfindung betrifft eine Anlage zur Tauchbehandlung von Gegenständen, insbesondere von Fahrzeugkarosserien, mit
a) mindestens einem Tauchbecken, das bis zu einem bestimmten Spiegel mit einer Behandlungsflüssigkeit befüllbar ist;
b) einem Transportsystem, welches die Gegenstände an das Tauchbecken heran und von diesem weg bewegt;
c) mindestens einer stationären Drehstation, die an dem Tauchbecken vorgesehen ist und eine Drehplattform aufweist, auf welcher jeweils mindestens ein Gegenstand befestigbar ist und die zwischen einer ersten Position, in welcher sich der Gegentand oberhalb des Spiegels der Behandlungsflüssigkeit befindet, und einer zweiten Position, in welcher sich der Gegenstand unterhalb des Spiegels der Behandlungsflüssigkeit befindet, und/oder in der Gegenrichtung zwischen diesen beiden Positionen verdrehbar ist;
   wobei
d) jeder Gegenstand mittels einer Befestigungseinrichtung auf einem Skid befestigbar ist, der mit dem Transportsystem zusammenwirkt und auf der Drehplattform der Drehstation festlegbar ist, wobei der Skid ein Grundgerüst und eine Befestigungseinrichtung für den Gegenstand aufweist.

Derartige Anlagen sind beispielsweise in der DE 43 04 145 C1 oder der EP 0 749 395 B1 beschrieben. Das Dokument DE 43 04 145 C1 offenbart eine Anlage zur Tauchbehandlung von Gegenständen nach dem Oberbegriff des Anspruchs 1.

Dort sind die eingesetzten Skids im Wesentlichen in sich starre Gebilde, bei denen die aufgesetzte Fahrzeugkarosserie sich gegenüber dem Grundgerüst nicht bewegen kann. Die Plattformen der Drehstationen, auf welche die Skids mit den Fahrzeugkarosserien aufgesetzt werden, sind über verhältnismäßig lange Lenker mit der Drehachse der jeweiligen Drehstation verbunden. Dies ist notwendig, um die Fahrzeugkarosserien bei einer Drehung um 180° tatsächlich unter den Spiegel der Behandlungsflüssigkeit im Tauchbecken zu bringen, da sich die Drehachse selbst außerhalb der Behandlungsflüssigkeit befinden soll. Auf diese Weise ergibt sich eine verhältnismäßig grosse Höhe, auf der sich die Fahrzeugkarosserie innerhalb der Drehstation befindet, was sich in einem entsprechenden Höhenniveau der heran- und abführenden Transportsysteme niederschlägt. Eine solche Höhe ist jedoch insbesondere in vor- und nachgeschalteten Anlagenteilen nicht erwünscht, durch welche die Fahrzeugkarosserien auf denselben Skids geführt werden sollen.

Aufgabe der vorliegenden Erfindung ist es, eine Anlage der eingangs genannten Art derart auszugestalten, dass die Höhenposition der nicht eingetauchten Gegenstände auf der Drehstation möglichst niedrig ist.

Diese Aufgabe wird erfindungsgemäß dadurch gelöst, dass
e) die Befestigungseinrichtung des Skids so ausgestaltet ist, dass sich der Abstand des Gegenstands zu dem Grundgerüst des Skids bei der Verdrehung auf der Drehplattform der Drehstation verändert, derart, dass der an der Befestigungseinrichtung befestigte Gegenstand in der ersten, ausgetauchten Position einen kleineren Abstand von der Drehplattform als in der zweiten, eingetauchten Position besitzt.

Erfindungsgemäß wird also das Konzept herkömmlicher Skids aufgegeben, die Fahrzeugkarosserie völlig starr und unbeweglich an dem Grundgerüst des Skids zu befestigen. Statt dessen wird dem Gegenstand die Freiheit gegeben, sich in ganz definierter Weise gegenüber dem Grundgerüst des Skids unter dem Einfluss der Schwerkraft, ggfs. auch unter dem Einfluss eines aktiven Antriebs, bei der Drehbewegung in der Drehstation zu bewegen. Die Schwerkraft bzw. die Antriebseinrichtung sorgt dafür, dass der Gegenstand in der ausgetauchten Position, in der er sich oberhalb der Drehachse befindet, so nah wie möglich an das Grundgerüst des Skids ist heranrückt. Bei der Verdrehung der Drehplattform gewinnt jedoch der der Befestigungseinrichtung eingeräumte Freiheitsgrad an Bedeutung und lässt es zu, dass die Schwerkraft den Gegenstand von dem Grundgerüst wegzieht. Nach einer Drehung um 180°, in welcher der Gegenstand gewissermaßen "auf dem Rücken" liegt, besitzt dieser dann den maximalen Abstand vom Grundgerüst und damit auch von der Drehachse. Auf diese Weise ist es möglich, trotz eines verhältnismäßig kleinen Abstandes zwischen der Drehplattform und der Drehachse der Drehstation die zu behandelnden Gegenstände vollständig unter den Spiegel der Behandlungsflüssigkeit im Tauchbecken zu bringen.

Bei einer bevorzugten Ausführungsform der Erfindung weist die Befestigungseinrichtung eine Haltestruktur für den Gegenstand auf, an der mindestens zwei Schwenkarme an einem Ende angelenkt sind, die mit ihrem anderen Ende mit dem Grundgerüst des Skids gelenkig verbunden sind, derart, dass sich eine Parallelogrammführung für die Haltestruktur gegenüber dem Grundgerüst ergibt. Bei diese Ausführungsform schließen die Schwenkarme im ausgetauchten Zustand einen spitzen Winkel mit dem Grundgerüst des Skids ein, der sich bei der Verdrehung der Drehplattform progresiv öffnet und bei einer Verdrehung von 180° einen Wert von 90° erreicht.

Alternativ kann die Haltestruktur über eine Schere oder auch eine Teleskopeinrichtung mit dem Grundgerüst verbunden sein. Auch Schere oder Teleskopeinrichtung lassen eine Bewegung der Haltestruktur und damit des Gegenstandes gegenüber dem Grundgerüst unter dem Einfluss der Schwerkraft in bestimmten Drehstellungen der Drehplattform zu.

Zweckmäßig ist ferner, wenn die Skids an ihren Kufen Rollen aufweisen, die mit Führungsschienen an der Drehplattform der Drehstation zusammenwirken. Die Skids können auf diese Weise unverändert in allen Anlagenbereichen eingesetzt werden, wo sie mit herkömmlichen Transportsystemen bewegt werden. Auf der Drehplattform dagegen kommen ihre Rollen in Funktion, die sich in den Führungsschienen der Drehplattform bewegen können. Zum Auf- und Abbewegen der Skids auf die Drehplattform bzw. von der Drehplattform herunter können einfache Schiebevorrichtungen verwendet werden.

Vorteilhaft ist schließlich, wenn die Befestigungseinrichtung eine Dämpfungseinrichtung aufweist, welche die unter dem Einfluss der Schwerkraft stattfindende Bewegung des Gegenstandes gegenüber dem Grundgerüst des Skids bremst. Auf diese Weise lässt sich die Geschwindigkeit, mit welcher sich der Gegenstand gegenüber dem Grundgerüst unter dem Einfluss der Schwerkraft bewegt, auf das gewünschte Maß begrenzen.

Ein Ausführungsbeispiel der Erfindung wird nachfolgend anhand der Zeichnung näher erläutert; es zeigen
- Figur 1: perspektivisch einen Ausschnitt aus einer Anlage zur kataphoretischen Tauchlackierung von Fahrzeugkarosserien;
- Figur 2: die Seitenansicht der Anlage von Figur 1;
- Figur 3: in größerem Maßstab und perspektivisch eine Drehplattform mit aufgesetzter Fahrzeugkarosserie, wie sie bei der Anlage der Figur 1 eingesetzt wird, in einer ersten Drehposition;
- Figur 4: die Seitenansicht zu Figur 3;
- Figur 5: perspektivisch die Drehplattform der Figur 3 mit Fahrzeugkarosserie, jedoch um 180° verdreht;
- Figur 6: die Seitenansicht zu Figur 5;
- Figur 7: einen Schnitt durch die Anlage der Figuren 1 und 2 gemäß der Linie B-B von Figur 2 in größerem Maßstab;
- Figur 8: einen Schnitt ähnlich der Figur 2, jedoch gemäß der Linie C-C von Figur 2;
- Figur 9: die perspektivische Ansicht eines fahrbaren Halterungsgestelles mit aufgesetzter Fahrzeugkarosserie, wie es bei der Anlage der Figur 1 verwendet wird;
- Figur 10: die Seitenansicht des Halterungsgestelles der Figur 9 ohne Fahrzeugkarosserie;
- Figur 11: die Draufsicht auf das Halterungsgestell;
- Figur 12: perspektivisch das Halterungsgestell ohne Fahrzeugkarosserie;
- Figur 13: verschiedene Phasen der Drehung beim Eintauchen einer Fahrzeugkarosserie in ein Lackbad.

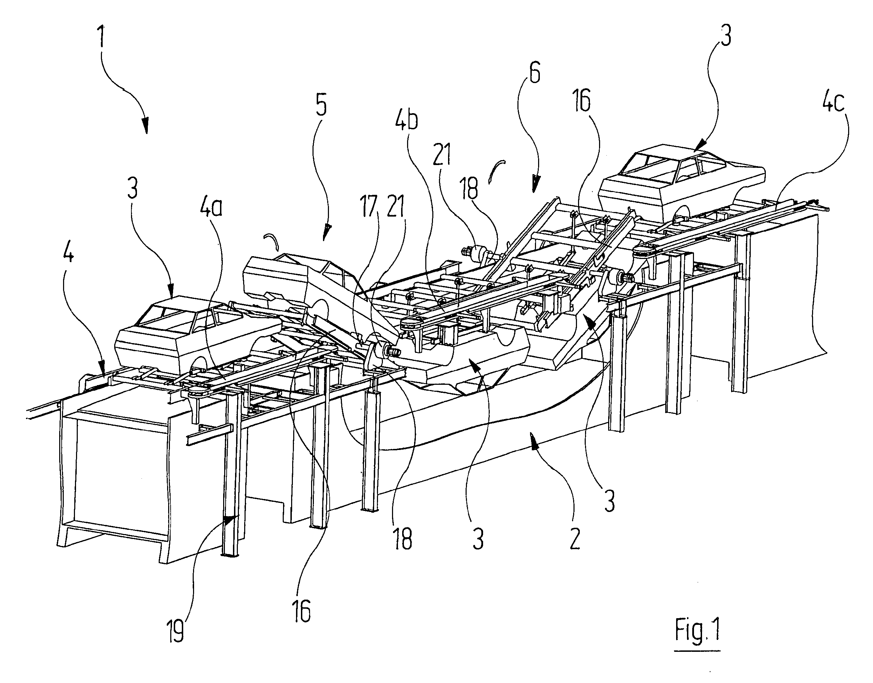

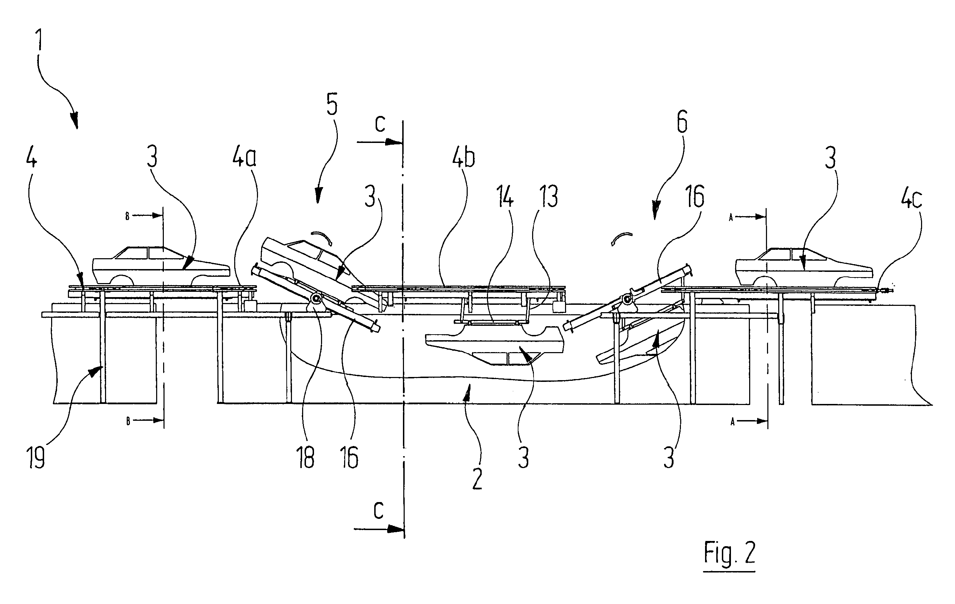

Die in den Figuren 1 und 2 ausschnittsweise dargestellte und insgesamt mit dem Bezugszeichen 1 gekennzeichnete Anlage zur kataphoretischen Tauchlackierung von Fahrzeugkarosserien ist als Beispiel für eine Anlage zur Tauchbehandlung von Fahrzeugkarosserien zu verstehen. Sie weist als Hauptbestandteil ein Tauchbecken 2 auf, das im betriebsbereiten Zustand bis zu einer bestimmten Höhe mit Lack angefüllt ist. Die zu lackierenden Fahrzeugkarosserien 3 werden mit Hilfe eines Transportsystemes 4 in Figur 1 von links nach rechts durch die Anlage 1 hindurchgeführt. Es ist durch zwei stationäre Drehstationen 5, 6 unterbrochen, so dass es also einen Einlaufabschnitt 4a, einen Zwischenabschnitt 4b und einen Auslaufabschnitt 4c des Transportsystems 4 im Bereich des Tauchbeckens 2 gibt.

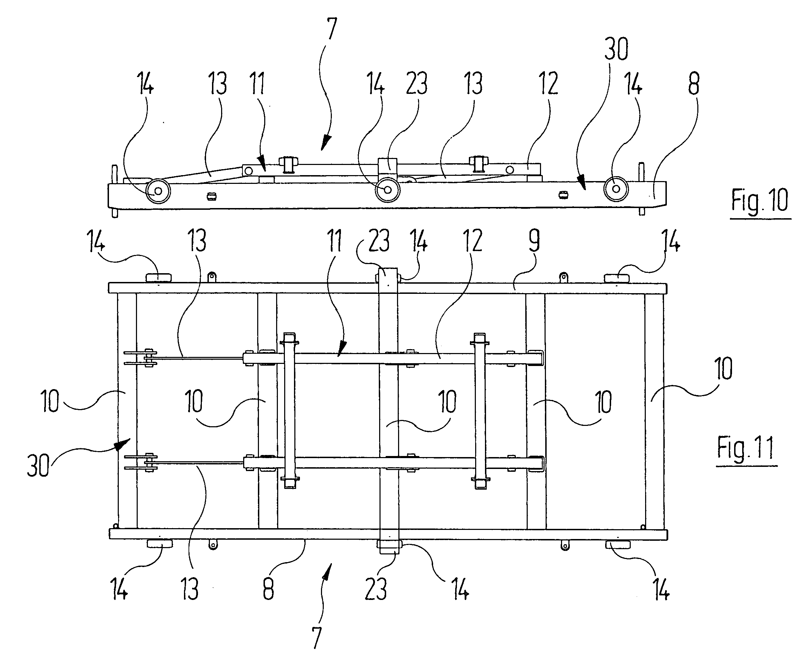

Die Fahrzeugkarosserien 3 werden durch die gesamte Anlage auf dem Transportsystem 4 mit Hilfe von Halterungsgestellen 7, sog. "Skids" geführt, wie sie in den Figuren 10 bis 12 näher dargestellt sind. Skids als solche sind zum Transport von Fahrzeugkarosserien bekannt. Sie zeichnen sich generell dadurch aus, dass sie zwei an einem Grundgerüst befestigte parallele Kufen 8, 9 aufweisen, die in außerhalb der hier beschriebenen Anlage befindlichen Bereichen der Automobilfertigung mit einem bekannten Fördersystem, häufig mit Rollenförderersystemen, zusammenwirken. Damit der hier beschriebene Skid 7 auch in diesen anderen Bereichen eingesetzt werden kann, besitzt er ebenfalls solche Kufen 8, 9. Diese Kufen 8, 9 sind im dargestellten Ausführungsbeispiel durch fünf senkrecht zu ihnen verlaufende Streben 10 miteinander verbunden, die im vorliegenden Falle das Grundgerüst 30 bilden.

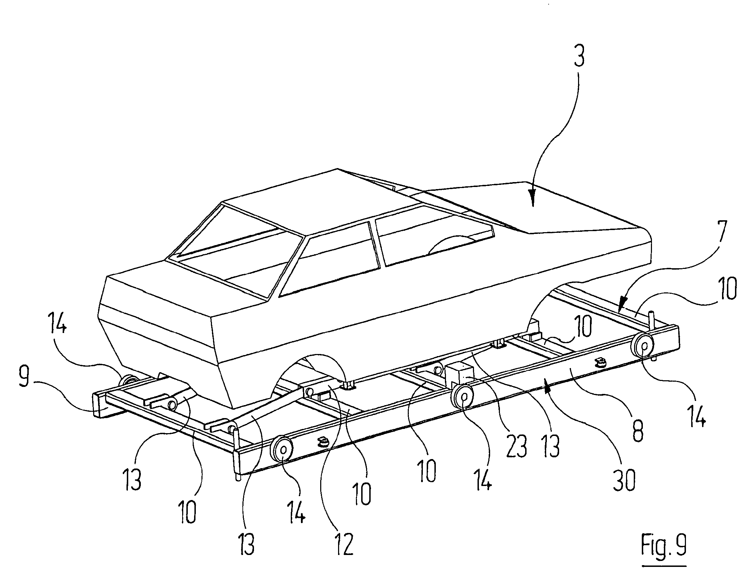

Während an bekannten Skids die Fahrzeugkarosserien starr befestigt sind, sich also insbesondere gegenüber den Kufen und dem Grundgerüst nicht bewegen können, besitzt der hier dargestellte Skid 7 eine Befestigungseinrichtung 11, welche sich gegenüber dem Grundgerüst 30 bewegen kann. Diese Befestigungseinrichtung 11 umfasst einen rechteckigen Rahmen 12, der eine Haltestruktur bildet, auf welcher die Fahrzeugkarosserie 3 in bekannter Weise mit üblichen Befestigungsmitteln befestigt werden kann. Dies ist in Figur 9 dargestellt.

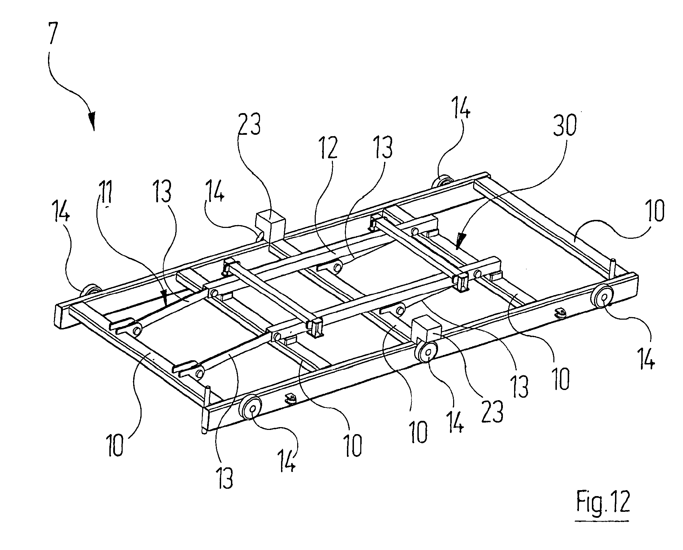

Der Rahmen 12 ist nach Art einer Parallelogrammführung über vier Schwenkarme 13 mit dem Grundgerüst verbunden. Zwei dieser Schwenkarme 13 sind am im Bewegungsrichtung nachlaufenden Ende des Rahmens 12 gelenkig angebracht und an ihren gegenüberliegenden Enden gelenkig mit der in Figur 12 am weitesten links liegenden Strebe 10 des Grundgerüsts 30 verbunden. Zwei weitere dieser Schwenkarme 13 sind in ähnlicher Weise gelenkig zwischen den in Bewegungsrichtung vorauseilenden Bereich des Rahmens 12 und die mittlere Strebe 10 gelegt. Die Gesamtanordnung ist also die, dass der Rahmen 12 der Befestigungseinrichtung sich unter Verschwenken der Schwenkarme 13 parallel zu sich selbst senkrecht zum Grundgerüst 30 bewegen kann, wobei selbstverständlich mit dieser Schwenkbewegung eine gewisse Translationsbewegung des Rahmens 12 verbunden ist.

Ein weiterer Unterschied der hier verwendeten Skids 7 gegenüber bekannten besteht darin, dass an den nach außen zeigenden Seitenflächen der Kufen 8, 9 Rollen 14 gelagert sind.

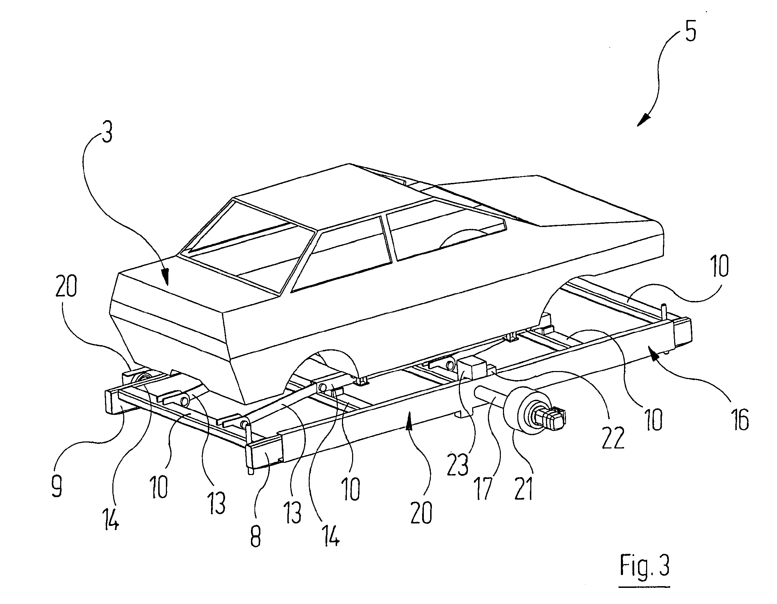

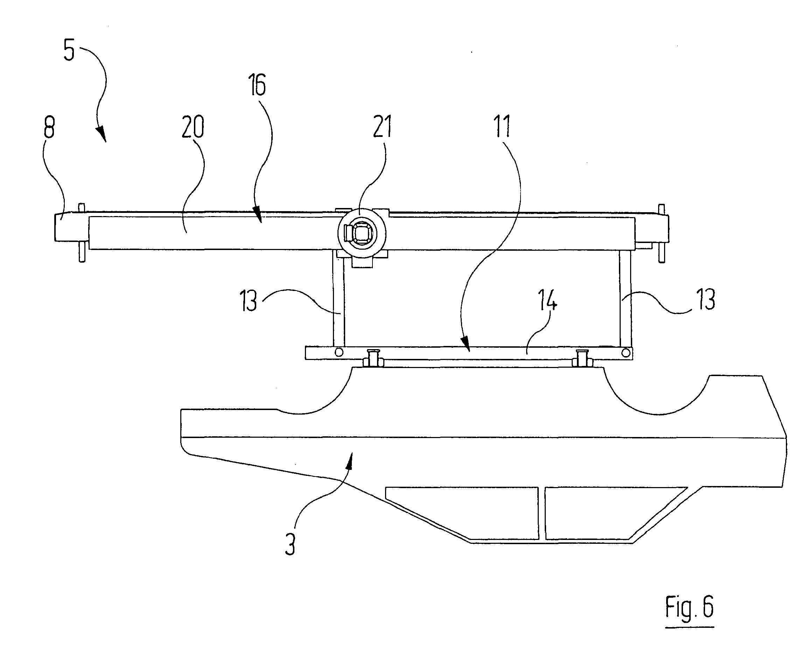

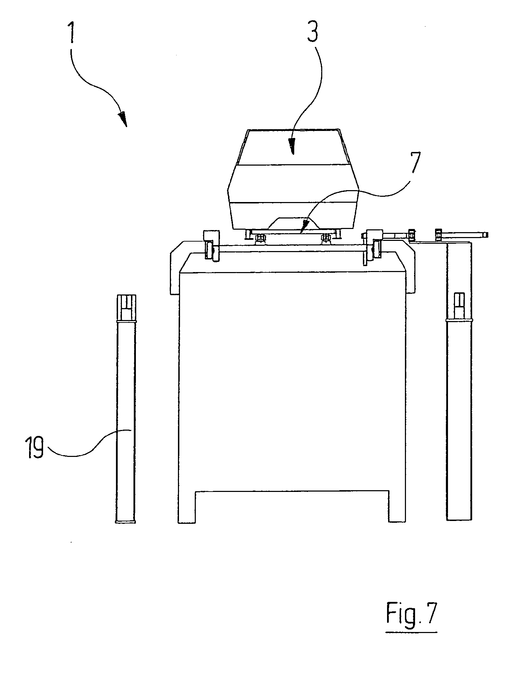

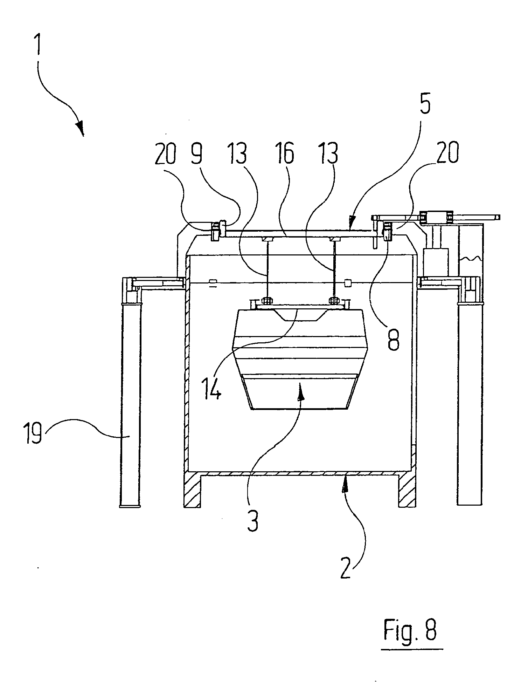

Beide Drehstationen 5, 6 sind grundsätzlich in derselben Weise aufgebaut, so dass es genügt, anhand der Figuren 3 bis 8 und 13 den Aufbau und die Funktionsweise der in den Figuren 1 und 2 linken Drehstation 5 zu beschreiben, welche dem Eintauchen der Fahrzeugkarosserien 3 in den im Tauchbecken 2 befindlichen Lack dient.

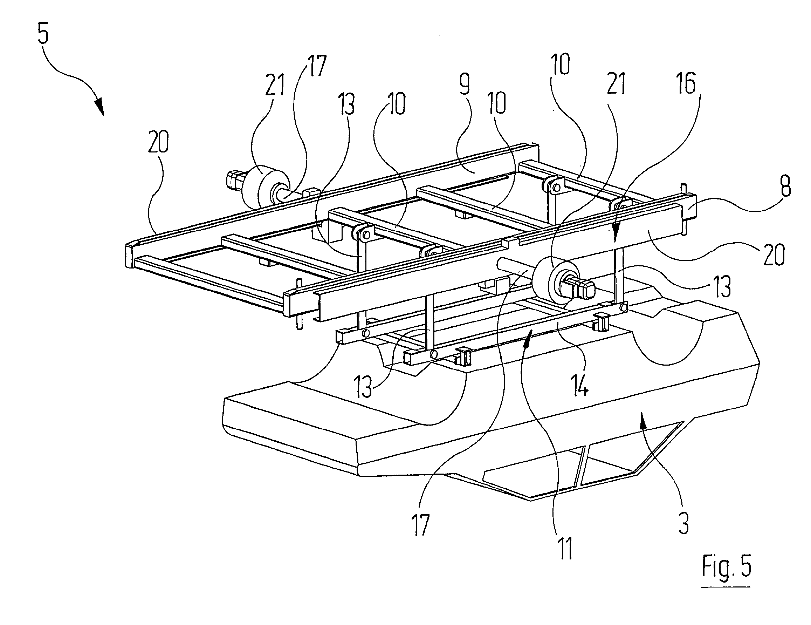

Der Aufbau einer Drehstation 5 ist verhältnismäßig einfach. Sie umfasst zwei kurze fluchtende und quer zur Förderrichtung verlaufende Drehachsen 17 (vgl. insbesondere Figur 5), die beidseits des Tauchbeckens 2 in Lagerböcken 18 gelagert sind, wie den Figuren 1 und 2 zu entnehmen ist. Die Lagerböcke 18 sind an einem Stahlbau 19 befestigt, der insbesondere auch das gesamte Transportsystem 4 trägt. Jede Drehachse 17 ist mit einer in Bewegungsrichtung des Transportsystemes 4 ausgerichtete Führungsschiene 20 drehschlüssig verbunden, die ein solches Profil aufweist. Die beiden Führungsschienen 20 besitzen einen solchen Abstand voneinander, dass sie die Kufen 8, 9 aufnehmen können. Dabei laufen die Rollen 14 an den Kufen 8, 9 des Skids 7 an der Innenfläche der Führungsschienen 20 ab. Die Füh-Beide Drehachsen 17 können mit Hilfe zweier auf gegenüberliegenden Seiten des Tauchbeckens 2 angeordneter Getriebemotoren 21 synchron in Drehung versetzt werden. Die beiden Drehachsen 17 und die beiden Führungsschienen 20 bilden auf diese Weise eine funktionale Einheit, die hier "Drehplattform" 16 genannt wird. Die beiden Führungsschienen 20 könnten daher auch starr miteinander verbunden sein.

Die beschriebene Ausführungsform der Drehplattform 16 hat den Vorteil, dass im mittleren Bereich zwischen den Achsen 17 Platz zur Verfügung steht, der anderweitig genutzt werden kann. kann.

Die Abschnitte 4a, 4b und 4c des Transportsystemes 4 sind als herkömmliche Rollenbahnförderer ausgebildet. Die Bewegung der Fahrzeugkarossserien 5 auf die Drehplattformen 16 bzw. von diesen weg wird mit Hilfe eines hier nicht im Einzelnen dargestellten Schiebemechanismus bewirkt, der mit Ketten-angetriebenen Mitnehmern an den Skids 7 angreift.

Die Führungsschienen 20 der Drehplattformen 16 weisen an ihrer Oberseite jeweils einen Anschlag 22 auf. Das Grundgerüst der Skids 7 besitzt ebenfalls auf gegenüberliegenden Seiten Anschläge 23, die so seitlich nach außen über die Kufen 8, 9 hinwegragen, dass sie mit den Anschlägen 22 der Führungsschienen 20 der Drehplattformen 16 zusammenwirken können.

Die Funktionsweise der oben beschriebenen Anlage ist wie folgt:
Die zu lackierenden Fahrzeugkarosserien 3 werden mit Hilfe des Einlaufabschnittes 4a des Transportsystemes 4 in den Figuren 1 und 2 von links kommend zugefördert. Sie sind dabei auf der Befestigungseinrichtung 11, genauer auf dessen Rahmen 12, montiert. Das Parallelogramm, das in der Seitenansicht von dem Rahmen 12, den Schwenkarmen 13 und dem Grundgerüst 30 des Skids 7 gebildet wird, ist flach zusammengedrückt, wie dies den Figuren 9 und 10 zu entnehmen ist. Die Karosserien 3 werden somit in geringstmöglicher Höhe über dem Transportsystem 4 befördert.

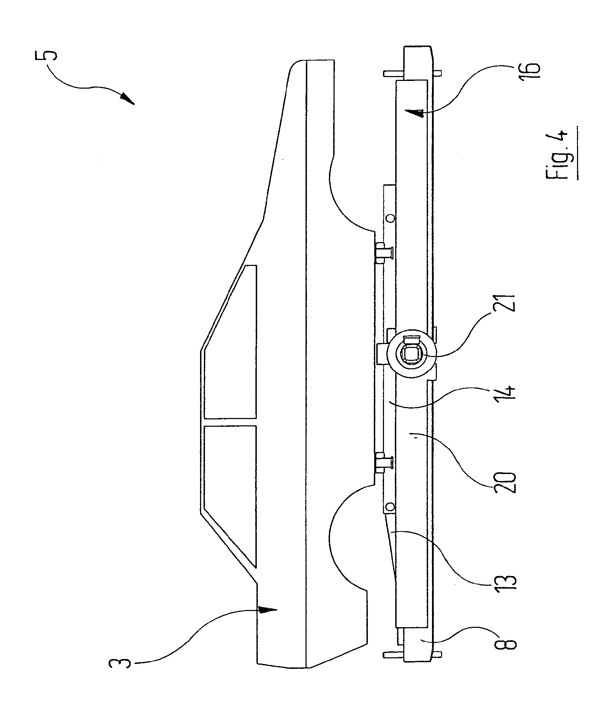

Wenn die Fahrzeugkarosserien 3 in den Bereich der ersten Drehstation 5 gelangen, übernimmt das oben erwähnte, jedoch nicht dargestellte, Schiebesystem den Weitertransport des die Fahrzeugkarosserie 3 tragenden Skids 7 und schiebt diesen auf die Drehplattform 16 dieser Drehstation 5. Dabei werden die Kufen 8, 9 des Skids 7 in die Führungsschienen 20 der Drehplattform 16 eingeführt; die Rollen 14 an den Außenseiten der Kufen 8, 9 laufen dabei im Inneren der Führungsschienen 20 ab. Der Skid 7 mit der daran befestigten Fahrzeugkarosserie 3 wird so weit auf die Drehplattform 16 aufgeschoben, bis die Anschläge 23 des Skids 7 an den Anschlägen 22 der Drehplattform 16 in Anlage kommen. Dann kann bei Bedarf der Skid 7 in geeigneter Weise an der Drehplattform 16 verriegelt werden. Es ist nunmehr derjenige Zustand erreicht, der in den Figuren 3 und 4 dargestellt ist.

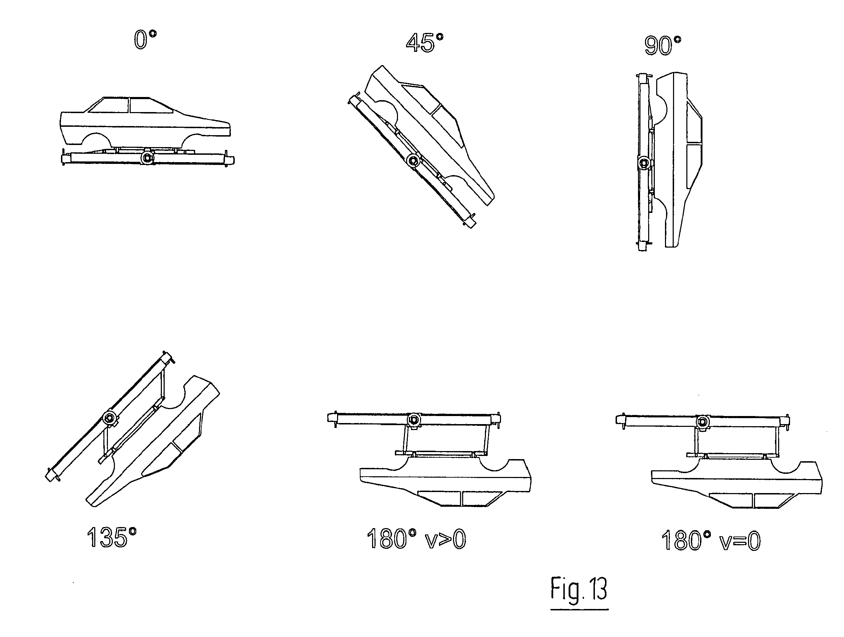

Nunmehr werden die Getriebemotoren 21 bestromt, so dass sich die Drehplattform 16 zu drehen beginnt, und zwar im Uhrzeigersinn. Sie durchläuft dabei einen Winkel von 180°. Wie der oberen Reihe der Einzelfiguren der Figur 13 zu entnehmen ist, bleibt das Parallogramm zwischen Rahmen 12 der Befestigungseinrichtung 11 und dem Grundgerüst 30 des Skids 7 bis zu einer Position von etwa 90° "zusammengeklappt". Wird nunmehr die Drehbewegung fortgesetzt, so beginnt sich unter dem Einfluss der Schwerkraft das Parallogramm zu öffnen, wie dies in der Teilfigur unten links der Figur 13 für einen Drehwinkel von 135° dargestellt ist. Wenn der volle Drehwinkel von 180° erreicht ist, wird das Parallelogramm zu einem Rechteck; der Rahmen 12 der Befestigungseinrichtung 11 besitzt nunmehr den maximalen Abstand von dem Grundgerüst 30 des Skids 7, welcher der Länge der Schwenkarme 13 entspricht. Vergleicht man die Teilfiguren für 0° und 180° (v = 0) in Figur 13, so erkennt man, dass die nicht eingetauchte Fahrzeugkarosserie 3 (0°) einen sehr viel geringeren Abstand in vertikaler Richtung von der Drehplattform 16 aufweist, als in voll eingetauchtem Zustand (180°).

In der eingetauchten Position (Drehwinkel 180°) kann die Fahrzeugkarosserie 3 je nach Wunsch eine gewisse Zeit verharren. Früher oder später werden sie und der sie tragende Skid 7 mit Hilfe eines ähnlichen Schiebemechanismus in hängender Position auf den Zwischenabschnitt 4b des Transportsystems 4 geschoben. Dort wird sie nun in konventioneller Weise weiterbewegt, wobei sie sich durch den im Tauchbecken 2 befindlichen Lack bewegt. Aufgrund der Viskosität dieses Lackes stellt sich das Parallelogramm zwischen Rahmen 12 und Grundgerüst 30 des Skids 7 etwas schräg, wie dies der Teilfigur in der Mitte der unteren Reihe der Figur 13 zu entnehmen ist.

Hat die Fahrzeugkarosserie 3 in dieser hängenden Position den Zwischenabschnitt 4b des Transportsystems 4 durchquert, wird sie erneut mit Hilfe eines Schiebemechanismus auf die Drehplattform 16 der zweiten Drehstation 6 geschoben. Deren Drehplattform 16 wird nunmehr mit Hilfe der zugehörigen Getriebemotoren 21 in Drehung versetzt und zwar gegenläufig zur Drehung in der ersten Drehstation 5, also gegen den Uhrzeigersinn. Grundsätzlich wäre es aber auch denkbar, die Drehbewegung beim Austauchen der Fahrzeugkarosserie 3 in derselben Drehrichtung vorzunehmen wie das Eintauchen.

Hat dann die Fahrzeugkarosserie 3 wieder ihre ausgetauchte, im Wesentlichen horizontale Lage auf der Drehplattform 16 der zweiten Drehstation 6 erreicht, so kann sie mit Hilfe eines weiteren, nicht dargestellten Schiebemechanismus auf den Auslaufabschnitt 4c des Transportsystemes 4 geschoben und dort in herkömmlicher Weise weitertransportiert werden.

Dem beschriebenen Ausschnitt einer Tauchlackieranlage 1 können verschiedene andere Bearbeitungsstationen vor- und nachgeschaltet sein, die ebenfalls mit bestimmten Behandlungsflüssigkeiten gefüllte Tauchbecken aufweisen und durch welche die Fahrzeugkarosserien 3 in derselben Weise geführt werden, wie dies oben für das kataphoretische Tauchbad beschrieben wurde.

## Patentansprüche

1. Anlage (1) zur Tauchbehandlung von Gegenständen (3), insbesondere von Fahrzeugkarosserien, mit
a) mindestens einem Tauchbecken (2), das bis zu einem bestimmten Spiegel mit einer Behandlungsflüssigkeit befüllbar ist;
b) einem Transportsystem (4), welches die Gegenstände (3) an das Tauchbecken (2) heran und von diesem wegbewegt;
c) mindestens einer stationären Drehstation (5, 6), die an dem Tauchbecken (2) vorgesehen ist und eine Drehplattform (16) aufweist, auf welcher jeweils mindestens ein Gegenstand (3) befestigbar ist und die von einer ersten Position, in welcher sich der Gegenstand (3) oberhalb des Spiegels der Behandlungsflüssigkeit befindet, in eine zweite Position, in welcher sich der Gegenstand (3) unterhalb des Spiegels der Behandlungsflüssigkeit befindet, und/oder in der Gegenrichtung zwischen diesen beiden Positionen verdrehbar ist;
wobei
d) jeder Gegenstand (3) auf einem Skid (7) befestigbar ist, der mit dem Transportsystem (4) zusammenwirkt und auf der Drehplattform (16) der Drehstation (5, 6) festlegbar ist, wobei der Skid (7) ein Grundgerüst (30) und eine Befestigungseinrichtung (11) für den Gegenstand (3) aufweist;
**dadurch gekennzeichnet, dass**
e) die Befestigungseinrichtung (11) des Skids (7) so ausgestaltet ist, dass sich der Abstand des Gegenstandes (3) zu dem Grundgerüst (30) des Skids (7) bei der Verdrehung auf der Drehplattform (16) der Drehstation (5, 6) verändert, derart, dass der an der Befestigungseinrichtung (11) befestigte Gegenstand (3) in der ersten, ausgetauchten Position einen kleineren Abstand von der Drehplattform (16) als in der zweiten, eingetauchten Position besitzt.

2. Anlage nach Anspruch 1, **dadurch gekennzeichnet,**
**dass** die Befestigungseinrichtung (11) eine Haltestruktur (12) für den Gegenstand (3) aufweist, an der mindestens zwei Schwenkarme (13) mit einem Ende angelegt sind, die mit ihrem anderen Ende mit dem Grundgerüst (30) des Skids (7) gelenkig verbunden sind, derart, dass sich eine Parallelogrammführung für die Haltestruktur (12) gegenüber dem Grundgerüst (30) ergibt.

3. Anlage nach Anspruch 1, **dadurch gekennzeichnet,**
**dass** die Befestigungseinrichtung (11) eine Haltestruktur (12) für den Gegenstand aufweist, welche über eine Schere mit dem Grundgerüst des Skids verbunden ist.

4. Anlage nach Anspruch 1, dadurch gekennzeihnet,
dass die Befestigungseinrichtung (11) ein Haltegerüst für den Gegenstand aufweist, die über eine Teleskopeinrichtung mit dem Grundgerüst verbunden ist.

5. Anlage nach einem der vorhergehenden Ansprüche,
**dadurch gekennzeichnet, dass** die Skids (7) an ihren Kufen (8, 9) Rollen (14) aufweisen, die mit Führungsschienen (20) an der Drehplattform (16) der Drehstation (5, 6) zusammenwirken.

6. Anlage nach einem der vorhergehenden Ansprüche,
**dadurch gekennzeichnet, dass** die Befestigungseinrichtung (11) eine Dämpfungseinrichtung aufweist, welche die unter dem Einfluss der Schwerkraft stattfindende Bewegung des Gegenstandes (3) gegenüber dem Grundgerüst (30) des Skids (7) bremst.

## Claims

1. A system (1) for dip coating articles, in particular vehicle bodies, having
a) at least one dip tank (2) which may be filled with a treatment liquid up to a certain level;
b) a transport system (4) which moves the articles (3) up to and away from the dip tank (2);
c) at least one stationary turning station (5, 6) which is provided at the dip (2) tank and has a turning platform (16), on which at least one article (3) is fastened in each case and which may be turned from a first position in which the article (3) is above the level of the treatment liquid to a second position in which the article (3) is below the level of the treatment liquid, and/or may be turned in the opposite direction between these two positions;
wherein
d) each article (3) may be fastened to a skid (7) which cooperates with the transport system (4)and may be fixed on the turning platform (16) of the turning station (5, 6), wherein the skid (7) has a basic frame (30) and a fastening device (11) for the article (3);
**characterised in that**
e) the fastening device (11) of the skid (7) is constructed such that the spacing between the article (3) and the basic frame (30) of the skid (7) changes during turning on the turning platform (16) of the turning station (5, 6) such that the article (3) fastened on the fastening device (11) is at a smaller spacing from the turning platform (16) in the first, emerged from dipping position, than in the second, dipped position.

2. A system according to Claim 1, **characterised in that** the fastening device (11) has a retaining structure (12) for the article (3), on which at least two pivotal arms (13) are attached at one end and are connected in articulated manner at their other end to the basic frame (30) of the skid (7) such that a parallelogram guidance of the retaining structure (12) in relation to the basic frame (30) is produced.

3. A system according to Claim 1, **characterised in that** the fastening device (11) has a retaining structure (12) for the article which is connected to the basic frame of the skid by way of a scissor arrangement.

4. A system according to Claim 1, **characterised in that** the fastening device (11) has a retaining frame for the article which is connected to the basic frame by way of a telescopic device.

5. A system according to one of the preceding claims, **characterised in that**, on their runners (8, 9), the skids (7) have rollers (14) which cooperate with guide rails (20) on the turning platform (16) of the turning station (5, 6).

6. A system according to one of the preceding claims, **characterised in that** the fastening device (11) has a damping device which decelerates the gravity-effected movement of the article (3) in relation to the basic frame (30) of the skid (7).

## Revendications

1. Installation (1) de traitement par immersion d'objets (3), en particulier de carrosseries de véhicules, avec
a) au moins un bassin d'immersion (2), qui peut être rempli d'un liquide de traitement jusqu'à un niveau déterminé ;
b) un système de transport (4), qui transporte les objets (3) pour les apporter au bassin d'immersion (2) et les en éloigner ;
c) au moins un poste de rotation stationnaire (5, 6), qui est prévu auprès du bassin d'immersion (2) et qui présente une plate-forme rotative (16), sur laquelle au moins un objet (3) peut être respectivement fixé et laquelle peut être tournée d'une première position dans laquelle l'objet (3) se trouve au-dessus du niveau du liquide de traitement dans une deuxième position dans laquelle l'objet (3) se trouve en dessous du niveau du liquide de traitement, et/ou en sens contraire entre ces deux positions ;
sachant que
d) chaque objet (3) peut être fixé sur un skid (7), qui coopère avec le système de transport (4) et qui peut être fixé en position sur la plate-forme rotative (16) du poste de rotation (5, 6), sachant que le skid (7) présente un bâti de base (30) et un dispositif de fixation (11) pour l'objet (3) ;
**caractérisée en ce que**
e) le dispositif de fixation (11) du skid (7) est conçu de telle façon que la distance entre l'objet (3) et le bâti de base (30) du skid (7) se modifie lors de la rotation sur la plate-forme rotative (16) du poste de rotation (5, 6), de telle sorte que l'objet (3) fixé au dispositif de fixation (11) possède, dans la première position non immergée, une plus petite distance par rapport à la plate-forme rotative (16) que dans la deuxième position immergée.

2. Installation selon la revendication 1, **caractérisée en ce que** le dispositif de fixation (11) présente une structure de maintien (12) pour l'objet (3) à laquelle sont rattachés par une extrémité au moins deux bras pivotants (13) qui, par leur autre extrémité, sont reliés de manière articulée au bâti de base (30) du skid (7), de telle sorte qu'on obtient un guidage en parallélogramme pour la structure de maintien (12) par rapport au bâti de base (30).

3. Installation selon la revendication 1, **caractérisée en ce que** le dispositif de fixation (11) présente une structure de maintien (12) pour l'objet qui est reliée au bâti de base du skid par l'intermédiaire d'un parallélogramme articulé.

4. Installation selon la revendication 1, **caractérisée en ce que** le dispositif de fixation (11) présente un bâti de maintien pour l'objet qui est relié au bâti de base par l'intermédiaire d'un système télescopique.

5. Installation selon l'une des revendications précédentes, **caractérisée en ce que** les skids (7) présentent sur leurs patins (8, 9) des galets (14) qui coopèrent avec des rails de guidage (20) sur la plate-forme rotative (16) du poste de rotation (5, 6).

6. Installation selon l'une des revendications précédentes, **caractérisée en ce que** le dispositif de fixation (11) présente un dispositif d'amortissement qui freine le mouvement, qui a lieu sous l'influence de la gravité, de l'objet (3) par rapport au bâti de base (30) du skid (7).
